# EUROPÄISCHE PATENTANMELDUNG

(11) **EP 1 775 149 A1**
(43) Veröffentlichungstag der Anmeldung: **18.04.2007**
(21) Anmeldenummer: 06450138.0
(22) Anmeldetag: 28.09.2006
(51) Int. Cl.: B60C 27/12

(54) **Gleitschutzkette**

(30) Priorität: 12.10.2005 AT 16622005; 14.12.2005 AT 19982005; 27.12.2005 AT 20802005; 05.07.2006 AT 11512006
(71) Anmelder: PEWAG AUSTRIA GmbH, 8020 Graz (AT)
(72) Erfinder: Pengg, Ägyd, 9020 Klagenfurt (AT)
(74) Vertreter: Patentanwaltskanzlei Matschnig

(57) **Zusammenfassung**

Eine Gleitschutzkette (GLK) für ein Fahrzeug, wobei die Gleitschutzkette (GLK) einen in einem montierten Zustand an einer äußeren Seitenflanke (ASF) eines Fahrzeugreifens (REI) anliegenden Außenseitenstrang (ASS) und einen in einem montierten Zustand an einer inneren Seitenflanke (ISF) des Fahrzeugreifens (REI) anliegenden Innenseitenstrang (ISS) aufweist, wobei zwischen dem Außenseitenstrang (ASS) und dem Innenseitenstrang (ISS) ein in einem montierten Zustand an der Lauffläche (LFL) des Fahrzeugreifens (REI) anliegendes Kettennetz (KNE) angeordnet ist, wobei der Innenseitenstrang (ISS) dehnbar ausgebildet ist, wobei der Innenseitenstrang (ISS) einen einen inneren Teil (TE2) umhüllenden äußeren Teil (TE1) aufweist, wobei der äußere (TE1) und der innere Teil (TE2) von unterschiedlicher Dehnbarkeit sind.

## Beschreibung

Die Erfindung betrifft eine Gleitschutzkette für ein Fahrzeug, wobei die Gleitschutzkette einen in einem montierten Zustand an einer äußeren Seitenflanke eines Fahrzeugreifens anliegenden Außenseitenstrang und einen in einem montierten Zustand an einer inneren Seitenflanke des Fahrzeugreifens anliegenden Innenseitenstrang aufweist, wobei zwischen dem Außenseitenstrang und dem Innenseitenstrang ein in einem montierten Zustand an der Lauffläche des Fahrzeugreifens anliegendes Kettennetz angeordnet ist, und der Innenseitenstrang dehnbar ausgebildet ist.

Aus der FR 2561589 A1 ist eine Gleitschutzkette bekannt geworden, welche einen Innenseitenstrang und einen Außenseitenstrang aufweist, welche je als Gummiring ausgebildet sind. Zwischen dem Innenseitenstrang und dem Außenseitenstrang sind kreuzförmige Elemente angeordnet, welche auf der Lauffläche eines Reifens zu liegen kommen. Die Gleitschutzkette kann von der Reifenvorderseite durch Dehnen des Innenseitenstranges auf den Fahrzeugreifen gezogen werden. Nachteilig an der bekannten Ausführungsform ist vor allem, dass die Verwendung eines sehr starken Gummiringes die Montage wesentlich erschwert oder sogar unmöglich macht, während die Verwendung eines Gummiringes, der mit einem geringen Aufwand über den Reifen zu ziehen ist, einen schlechten Halt der Gleitschutzkette auf dem Fahrzeugreifen bedingt.

Es ist daher eine Aufgabe der Erfindung, eine Gleitschutzkette zu schaffen, die möglichst einfach zu montieren ist und bei der gleichzeitig ein optimaler Halt auf dem Fahrzeugreifen gewährleistet ist.

Diese Aufgabe wird mit einer Gleitschutzkette der eingangs genannten Art erfindungsgemäß dadurch gelöst, dass der Innenseitenstrang einen inneren Teil und einen diesen umhüllenden äußeren Teil aufweist, wobei der äußere und der innere Teil von unterschiedlicher Dehnbarkeit sind.

Mit der erfindungsgemäßen Lösung ist es möglich, sowohl eine einfache Montage der Gleitschutzkette und einen sehr guten Halt der montierten Kette auf einem Fahrzeugreifen zu gewährleisten.

Um besonders gute Montageigenschaften und einen guten Halt auf dem Reifen zu gewährleisten, ist es von Vorteil, wenn der äußere Teil des Innenseitenstrangs als geschlossener, zumindest abschnittsweise gummielastisch ausgebildeter, schlauchartiger Ring ausgebildet oder zu einem solchen Ring verbindbar ist.

Eine vorteilhafte Variante der Erfindung sieht vor, dass der innere Teil zwei gegeneinander in Längsrichtung des Inneren Teils verschiebbare Enden aufweist. Bei dieser Ausführungsform kann der Durchmesser des inneren Teils nach der Montage automatisch verringert werden, da der innere Teil durch die Kontraktion des äußeren Teils in sich verschoben werden kann. Im Gegenzug kann der Durchmesser des inneren Teils während der Montage durch Auseinanderziehen vergrößert werden.

Gemäß einer weiteren vorteilhaften Ausführungsform der Erfindung ist der innere Teil als zugstabile Feder ausgebildet. Aufgrund der Zugstabilität kann ein ungewolltes Dehnen des Innenseitenstranges während einer Fahrt und somit ein Lockern der Gleitschutzkette verhindert werden.

Eine einfach zu realisierende Variante der Erfindung sieht vor, dass an den zwei Enden des inneren Teils Ösen vorgesehen sind, durch welche gegeneinander verschiebbare freie Endabschnitte des inneren Teils geführt sind.

Um eine gute Fixierung des inneren Teils nach der Montage zu gewährleisten, kann der Innenseitenstrang eine Ratsche aufweisen, mittels welcher freie gegeneinander verschiebbare Endabschnitte des inneren Teils gegeneinander fixierbar sind. Gemäß einer Variante der Erfindung kann die Ratsche von einem Benutzer betätigbar sein.

Der Benutzungskomfort kann jedoch dadurch erhöht werden, dass die Ratsche eine Fliehkraftklemmung aufweist, sodass ein Abrollen des Reifens zu einer Fixierung der freien Endabschnitte führt.

Eine weitere Variante der Erfindung sieht vor, dass der innere Teil zumindest abschnittsweise gummielastisch ausgebildet ist. Bevorzugterweise ist der innere Teil als geschlossener Ring ausgebildet. Dies hat den Vorteil, dass bei einer Ausführungsform, bei welcher der äußere Teil zwei freie Enden aufweist, die mit je einem Teil eines lösbaren, selbstschließenden Verschlusses verbunden sind, welche wiederum mit dem inneren Teil des Innenseitenstranges verbunden sind, die Verschlussteile gegeneinander gezogen sind. Somit ist nach Überziehen des Innenseitenstranges über den Fahrzeugreifen auf dessen Innenseite ein automatisches Schließen des Innenseitenstranges ISS gewährleistet.

Die der Erfindung zugrunde liegende Aufgabe lässt sich auch dadurch lösen, dass zusätzlich zu dem Innenseitenstrang zumindest ein weiterer in einem montierten Zustand ebenfalls an der inneren Seitenflanke des Fahrzeugreifens anliegender elastischer Strang vorgesehen ist, wobei der Innenseitenstrang und der zumindest eine weitere Strang bevorzugterweise jeweils ringförmig ausgebildet sind. Durch diese Ausgestaltung lassen sich anstelle eines starken Gummiringes mehrere Gummiringe von geringerer Dicke verwenden, die nacheinander über den Reifen gestülpt werden.

Ein einfaches und zuverlässiges Spannen der Gleitschutzkette lässt sich dadurch erzielen, dass der Innenseitenstrang mittels Befestigungsmitteln direkt mit dem Kettennetz verbunden ist, sodass eine Krafteinleitung von durch den Innenseitenstrang hervorgerufenen Spannkräften unmittelbar in das Kettennetz gegeben ist.

Die Erfindung samt weiteren Vorteilen wird im Folgenden anhand einiger nicht einschränkender Ausführungsbeispiele, welche in der Zeichnung dargestellt sind, näher erläutert. In dieser zeigen:
Fig.1 eine erfindungsgemäße Gleitschutzkette in einer perspektivischen Ansicht;
Fig. 2 eine perspektivische Ansicht der Innenseite eines Reifens mit einer erfindungsgemäßen Gleitschutzkette in einem montierten Zustand;
Fig. 3 eine perspektivische Ansicht der Außenseite des Reifens aus Fig. 2 mit der erfindungsgemäßen Gleitschutzkette aus Fig. 2,
Fig. 4 eine perspektivische Ansicht der Lauffläche des Reifens aus Fig. 2 und Fig. 3 mit der erfindungsgemäßen Gleitschutzkette aus Fig. 2 und Fig. 3,

Fig. 5-14 zeigen unterschiedliche Varianten von Innenseitensträngen.

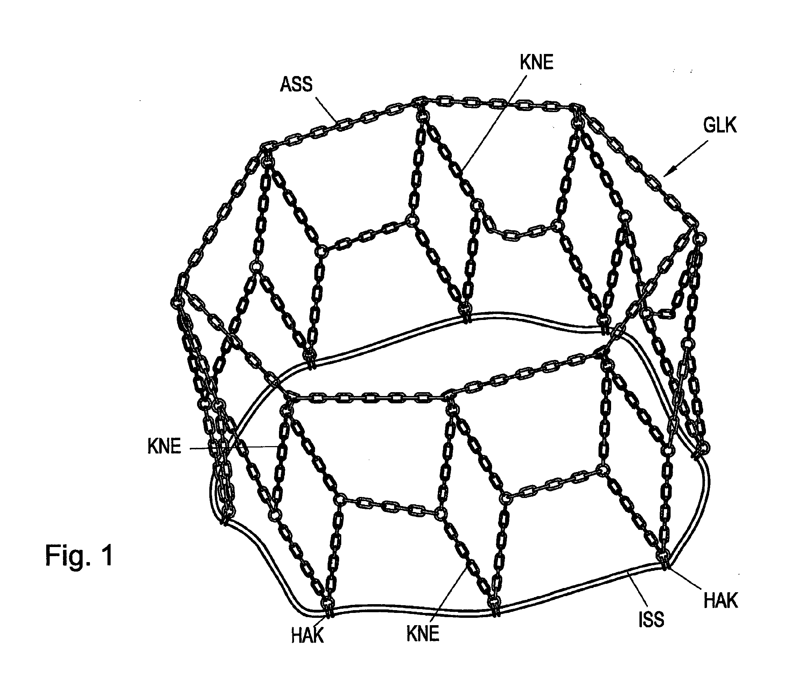

Gemäß Fig. 1 weist eine erfindungsgemäße Gleitschutzkette GLK bzw. Schneekette für ein Fahrzeug einen als Kette KEN ausgebildeten Außenseitenstrang ASS und einen Innenseitenstrang ISS auf. Zwischen dem Außenseitenstrang ASS und dem Innenseitenstrang ISS ist ein Kettennetz KEN angeordnet, wobei der Innenseitenstrang ISS dehnbar ausgebildet ist. Genauer gesagt kann der Innenseitenstrang ISS in Richtung seiner Längsachse gedehnt werden, wodurch sich die Länge des Innenseitenstranges ISS verändern lässt. Hierdurch wird die Montage der Gleitschutzkette auf einem Fahrzeugreifen erleichtert. Um in einem montierten Zustand einen guten Halt der Gleitschutzkette zu gewährleisten, ist der Innenseitenstrang ISS weiters elastisch ausgebildet.

Der Innenseitenstrang ISS kann mittels Befestigungsmitteln beispielsweise mittels Haken HAK oder hier nicht dargestellter Kunststoffclips direkt mit dem Kettennetz KNE verbunden sein, sodass eine Krafteinleitung von durch den Innenseitenstrang ISS hervorgerufenen Spannkräften unmittelbar in das Kettennetz KNE gegeben ist. Weiters kann der Innenseitenstrang mit Löchern versehen sein, durch welche die Haken geführt sind. Alternativ kann der Innenseitenstrang ISS auch in einem Textilband/gewebe enthalten sein. In diesem Textilband können Löcher vorgesehen sein, um die Haken HAK oder ähnliche Fixierungsmöglichkeiten für das Kettennetz KNE aufzunehmen. Auf diese Weise kann ein sehr guter Sitz der Gleitschutzkette auf einem Reifen erzielt werden.

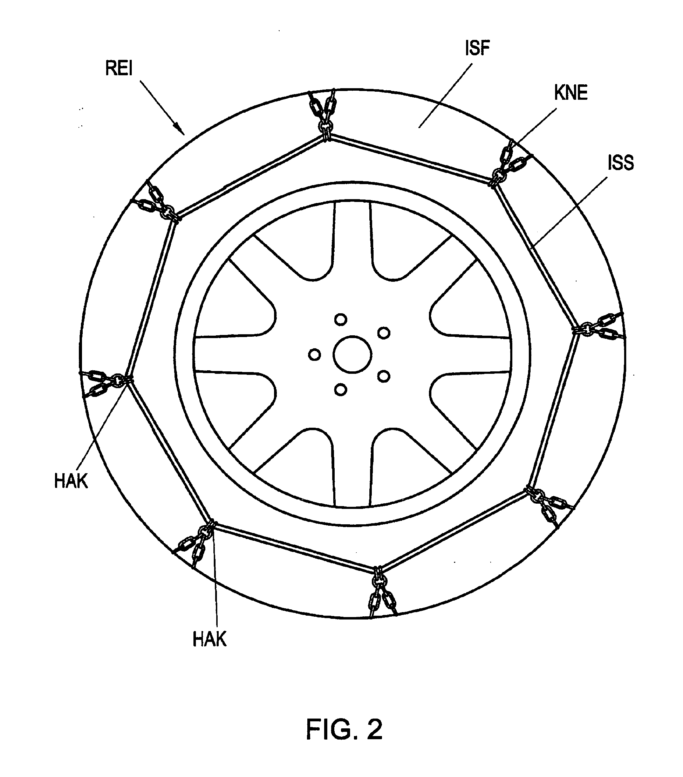

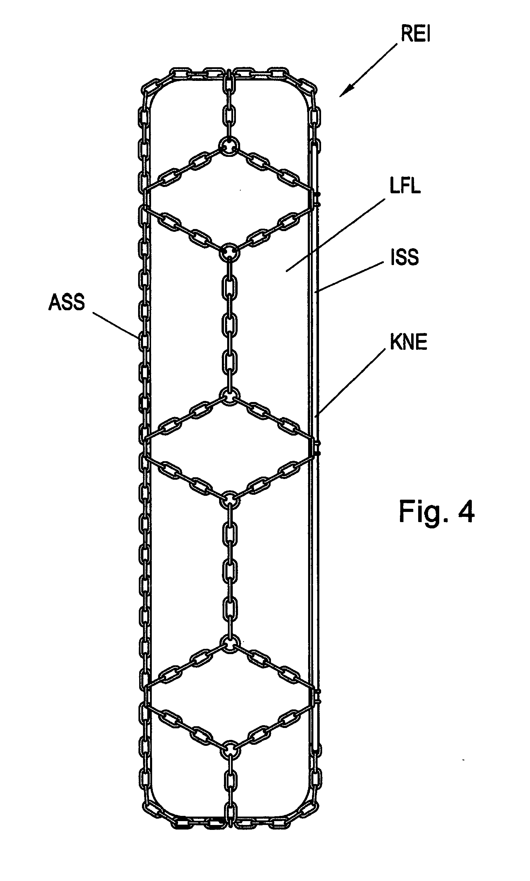

Zur Montage kann die Gleitschutzkette GLK einfach über einen in den Fig. 2 - 4 mit "REI" bezeichneten Reifen gestülpt werden. Der zu einem Ring geschlossene Innenseitenstrang ISS wir hierbei von der Außenseite des Reifens über dessen Lauffläche, die in Fig. 4 mit "LFL" bezeichnet ist, gezogen, was aufgrund der Dehnbarkeit des Innseitenstranges sehr einfach zu bewerkstelligen ist. An der Auflagefläche zwischen Reifen REI und Untergrund kann der Innenseitestrang ISS je nach Untergrundbeschaffenheit und Zugänglichkeit teilweise oder ganz zwischen den Untergrund und die Lauffläche des Reifens REI gezwängt werden. Nach Überstülpen der Gleitschutzkette GLK auf den Reifen kann einfach losgefahren werden, ohne weitere Montagemaßnahmen treffen zu müssen. Durch die Zugkräfte des Innenseitenstranges ISS wird der im Bereich der Auflagefläche des Reifens REI zwischen Lauffläche und Untergrund gezwängte Abschnitt des Innenseitenstranges automatisch auf die Innenseite des Reifens REI gezogen, sodass ein optimaler Sitz der Gleitschutzkette gewährleistet ist. Zur Demontage der Gleitschutzkette GLEI wird der Innenseitenstrang ISS wieder etwas gedehnt und von der Innenseite des Reifens REI auf dessen Vorderseite gezogen, d. h. von hinten über die Lauffläche nach vorne gestülpt.

Gemäß Fig. 2 liegt der Innenseitenstrang ISS in einem montierten Zustand der Gleitschutzkette GLK an einer Innenseitenflanke ISF des Fahrzeugreifens REI an. Der Außenseitenstrang ASS kann auch unterbrochen sein, um mit Haken verschlossen werden zu können. Anstelle der Haken kann auch eine Verbindung der Enden des Außenseitenstranges ASS mittels eines Ratschensystems erfolgen, um eine noch bessere Abspannung der Gleitschutzkette GLK zu erzielen.

Alternativ kann der Außenseitenstrang ASS auch durch einen Gummizug, oder durch gleichartig mit dem Innenseitenstrang ISS ausgebildeten Strang ersetzt werden. Prinzipiell sind aber auch beliebige andere Ausbildungen des Außenseitestranges ASS möglich beispielsweise als Seil, insbesondere ein Stahl oder Textilseil, oder auch als Textilband, insbesondere als schlauchförmiges Textilband, in dessen Inneren ein Gummistrang als Spannelement verläuft.

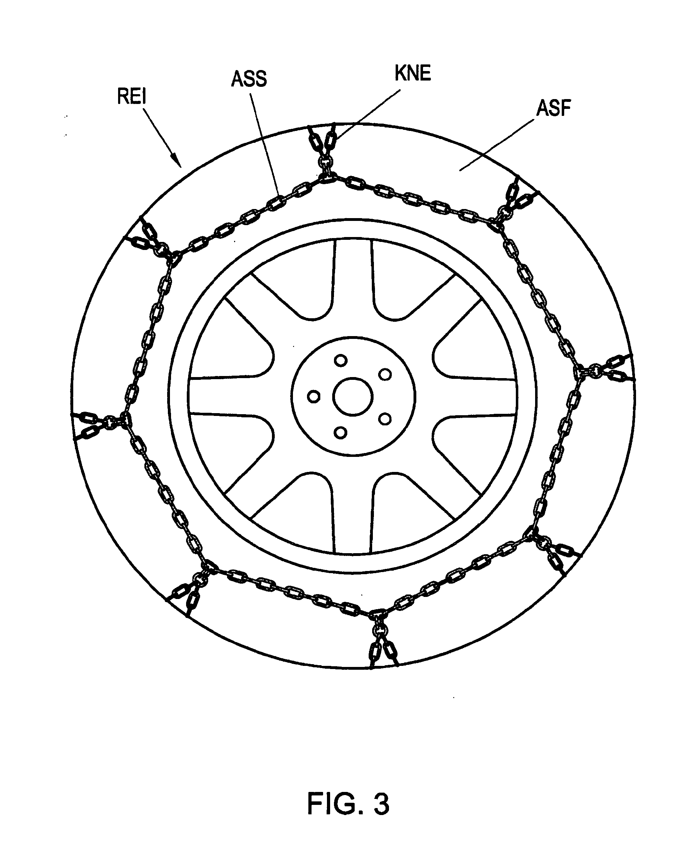

Wie in Fig. 3 gezeigt liegt der Außenseitenstrang ASS in einem montierten Zustand an der Außenseitenflanke AFL des Reifens REI an. In der hier gezeigten Ausführungsform ist der Außenseitenstrang ASS als eine durchgehende Kette ausgebildet. Allerdings ist es auch möglich, dass der Außenseitenstrang ASS als geteilte Kette ausgebildet und durch ein hier nicht dargestelltes Spannelement geschlossen ist.

Nach Fig. 4 liegt das Kettennetz KNE in einem montierten Zustand an der Lauffläche LFL des Reifens REI an. Das Kettennetz KNE ist mittels der Haken HAK direkt mit dem Innenseitenstrang ISS verbunden. Auch der Außenseitenstrang ASS kann so wie der Innenseitenstrang mittels Haken mit dem Kettennetz KNE verbunden sein.

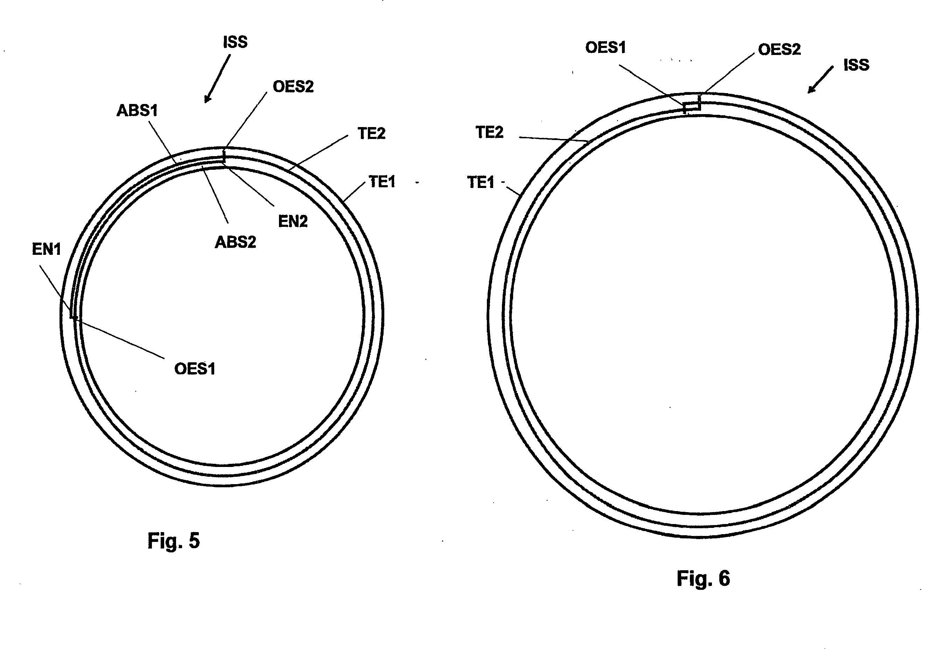

Wie aus Fig. 5 und 6 ersichtlich, weist der Innenseitenstrang ISS erfindungsgemäß einen inneren Teil TE2 und einen diesen umhüllenden äußeren Teil TE1 auf, wobei der äußere TE1 und der innere Teil TE2 von unterschiedlicher Dehnbarkeit sind. Der äußere Teil TE1 des Innenseitenstrangs ISS als geschlossener, schlauchartiger Gummiring ausgebildet. Der innere Teil TE2 ist als zugstabile Feder ausgebildet und weist zwei gegeneinander in Längsrichtung des inneren Teils TE2 verschiebbare Enden EN1, EN2 auf. An den zwei Enden EN1, EN2 des inneren Teils TE2 können Ösen OES1, OES2 vorgesehen sein, durch welche freie Endabschnitte ABS1, ABS2 des inneren Teils TE2 geführt sind. Durch Verschieben der Enden EN1, EN2 gegeneinander kann der Umfang des inneren Teils TE2 verändert werden. Der innere Teil TE2 wird durch den äußeren Teil TE1 zusammengezogen. Dies ist in Fig. 5 dargestellt. Durch Einwirken einer äußeren Kraft kann der äußere Teil TE1 gedehnt und gleichzeitig der Umfang des inneren Teils TE2 vergrößert werden, sodass ein Überstülpen des Innenseitenstranges ISS auf einen Reifen ermöglicht wird.

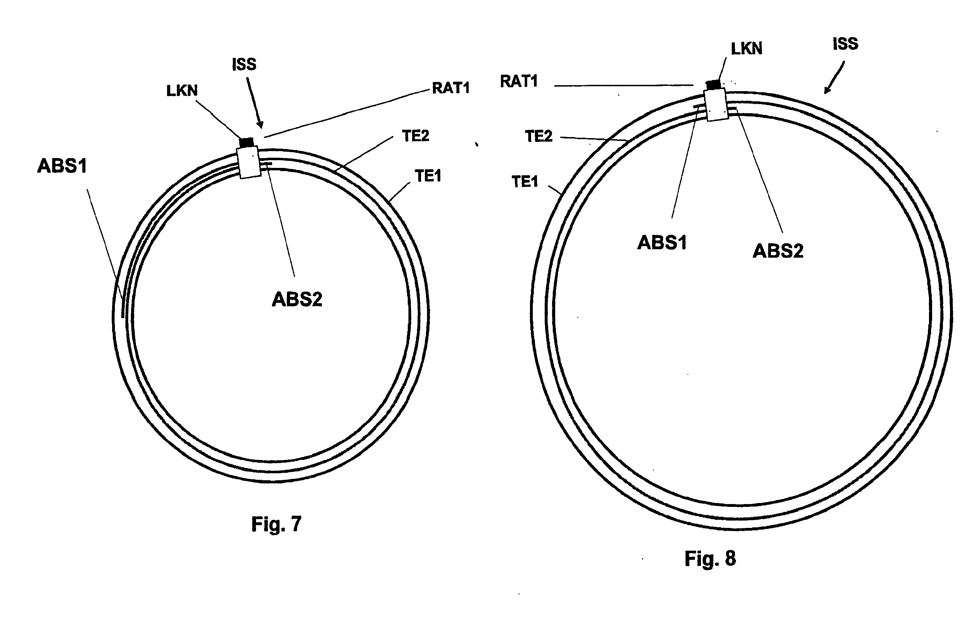

Gemäß Fig. 7 und 8 kann der Innenseitenstrang ISS eine Ratsche RAT1, RAT2 aufweisen, mittels welcher freie, gegeneinander verschiebbare Endabschnitte ABS1, ABS2 des inneren Teils TE2 fixierbar sind. Um ein Lösen der Ratsche RAT1 und somit ein Freigeben der Endabschnitte ABS1, ABS2 des inneren teils zu ermöglichen ist ein Betätigungsglied, beispielsweise in Form eines Löseknopfes LKN, vorgesehen. Fig. 7 zeigt den Innenseitenstrang ISS in einem montierten Zustand mit fixierter Ratsche RAT1. Fig. 8 zeigt den Innenseitenstrang ISS mit gelöster Ratsche und gedehntem äußeren Teil TE1.

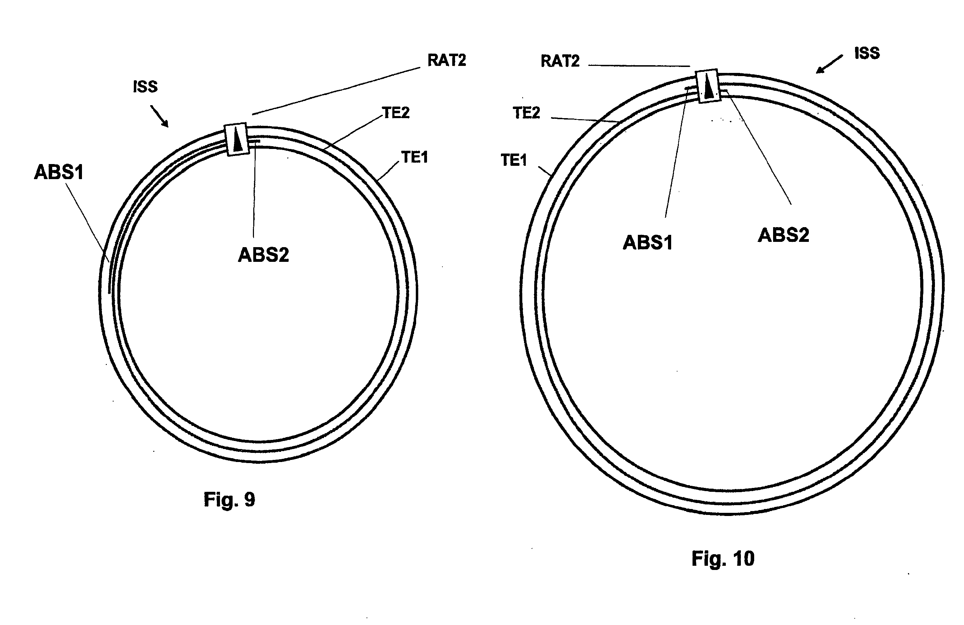

Wie in Fig. 9 und 10 dargestellt kann die Ratsche RAT2 eine Fliehkraftklemmung aufweisen, sodass ein Abrollen des Fahrzeugreifens REI zu einer Fixierung der freien Endabschnitte ABS1, ABS2 führt. In diesem Fall ist ein manuelles Lösen der Ratsche RATS2 nicht erforderlich. Fig. 9 zeigt den Innenseitenstrang ISS in einem montierten Zustand mit fixierter Ratsche RAT2 und zusammengezogenem äußeren Teil TE1. Fig. 10 zeigt den Innenseitenstrang ISS mit gelöster Ratsche RAT2 und gedehntem äußeren Teil TE1.

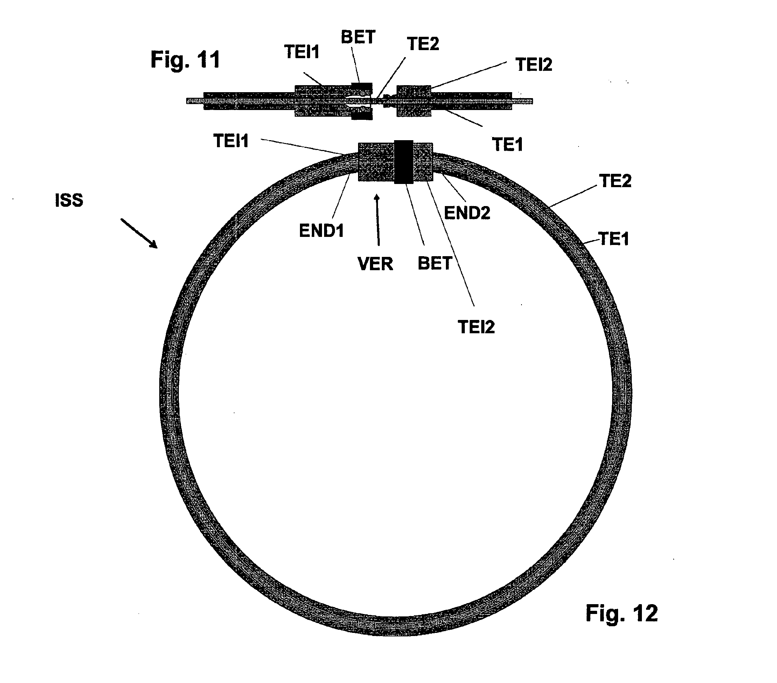

Gemäß der in Fig. 11 und 12 dargestellten Ausführungsform der Erfindung kann der innere Teil TE2 ebenfalls gummielastisch und ringförmig ausgebildet sein. Der äußere Teil TE1 weist hierbei zwei freie Enden END1, END2 auf, die mit je einem Teil TEI1, TEI2 eines lösbaren, selbstschließenden Verschlusses VER verbunden sind. Die beiden Teile TEI1, TEI2 des Verschlusses VER sind ebenfalls mit dem inneren Teil TE2 des Innenseitenstranges ISS verbunden. Durch die elastischen Rückstellkräfte des inneren Teils TE2 werden die beiden Verschlussteile TEI1 und TEI2 nach einer Dehnung des Innenseitenstranges ISS gegeneinander gezogen und schnappen ineinander ein. Der Verschluss VER kann mittels eines Betätigungsliedes BET, wieder gelöst werden.

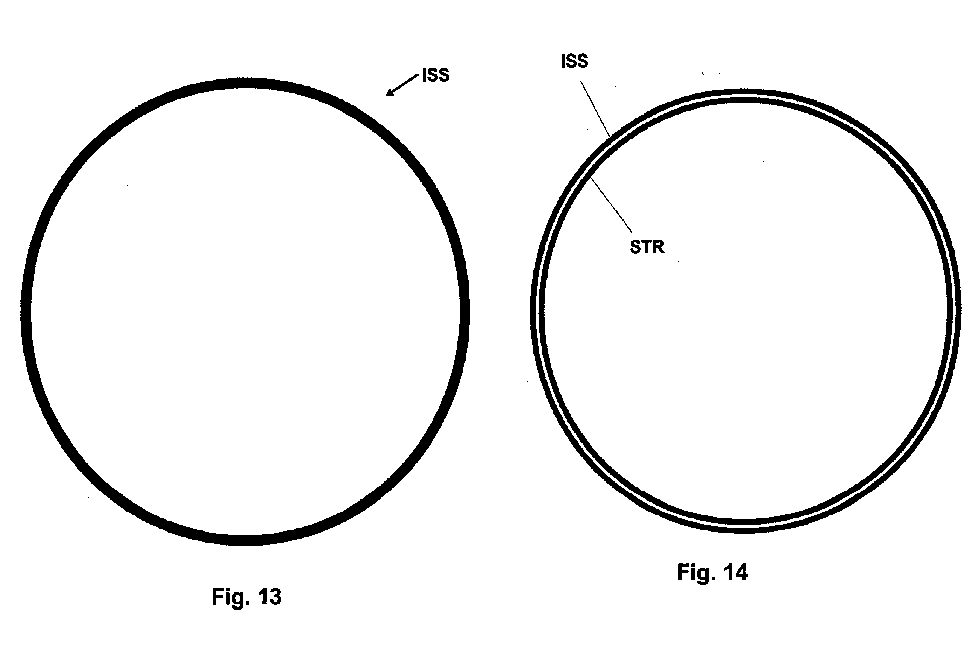

Gemäß Fig. 14 können anstelle eines in Fig. 13 dargestellten Innenseitenstranges ISS in Form eines Gummizuges zusätzlich zu diesem ein oder mehrere in einem montierten Zustand ebenfalls an der inneren Seitenflanke ASF des Fahrzeugreifens anliegende, ringförmig ausgebildete elastische Stränge STR vorgesehen sein, die zur Montage nacheinander über den Fahrzeugreifen gestülpt werden können.

Die Dimensionierung des Innenseitenstranges ISS wird bei allen Ausführungsformen so gewählt, dass er zu vorgegebenen Reifendimensionen passt, um einen optimalen Halt auf dem Reifen zu gewährleisten.

Natürlich können neben den oben genannten Ausführungsbeispielen noch andere hier nicht genannte Materialien und Ausbildungen zum Einsatz kommen, mit welchen sich die erfindungsgemäßen Eigenschaften des Innenseitenstranges ISS erzielen lassen.

## Patentansprüche

1. Gleitschutzkette (GLK) für ein Fahrzeug, wobei die Gleitschutzkette (GLK) einen in einem montierten Zustand an einer äußeren Seitenflanke (ASF) eines Fahrzeugreifens (REI) anliegenden Außenseitenstrang (ASS) und einen in einem montierten Zustand an einer inneren Seitenflanke (ISF) des Fahrzeugreifens (REI) anliegenden Innenseitenstrang (ISS) aufweist, wobei zwischen dem Außenseitenstrang (ASS) und dem Innenseitenstrang (ISS) ein in einem montierten Zustand an der Lauffläche (LFL) des Fahrzeugreifens (REI) anliegendes Kettennetz (KNE) angeordnet ist, und der Innenseitenstrang (ISS) dehnbar ausgebildet ist, **dadurch gekennzeichnet, dass** der Innenseitenstrang (ISS) einen inneren Teil (TE2) und einen diesen umhüllenden äußeren Teil (TE1) aufweist, wobei der äußere (TE1) und der innere Teil (TE2) von unterschiedlicher Dehnbarkeit sind.

2. Gleitschutzkette nach Anspruch 1, **dadurch gekennzeichnet, dass** der äußere Teil (TE1) des Innenseitenstrangs (ISS) als geschlossener, zumindest abschnittsweise gummielastisch ausgebildeter, schlauchartiger Ring ausgebildet oder zu einem solchen Ring verbindbar ist.

3. Gleitschutzkette nach Anspruch 1 bis 2, **dadurch gekennzeichnet, dass** der innere Teil (TE2) als zugstabile Feder ausgebildet ist.

4. Gleitschutzkette nach Anspruch 1 oder 3, **dadurch gekennzeichnet, dass** der innere Teil (TE2) zwei gegeneinander in Längsrichtung des Inneren Teils (TE2) verschiebbare Enden (EN1, EN2) aufweist.

5. Gleitschutzkette nach Anspruch 4, **dadurch gekennzeichnet, dass** an den zwei Enden (EN1, EN2) des inneren Teils (TE2) Ösen (OES1, OES2) vorgesehen sind, durch welche gegeneinander verschiebbare freie Endabschnitte (ABS1, ABS2) des inneren Teils (TE2) geführt sind.

6. Gleitschutzkette nach einem der Ansprüche 1 bis 4, **dadurch gekennzeichnet, dass** der Innenseitenstrang (ISS) eine Ratsche (RAT1, RAT2) aufweist, mittels welcher freie, gegeneinander verschiebbare Endabschnitte (ABS1, ABS2) des inneren Teils (TE2) fixierbar sind.

7. Gleitschutzkette nach Anspruch 6, **dadurch gekennzeichnet, dass** die Ratsche (RAT1) von einem Benutzer betätigbar ist.

8. Gleitschutzkette nach Anspruch 6, **dadurch gekennzeichnet, dass** die Ratsche (RAT2) eine Fliehkraftklemmung aufweist, sodass ein Abrollen des Fahrzeugreifens (REI) zu einer Fixierung der freien Endabschnitte (ABS1, ABS2) führt.

9. Gleitschutzkette nach Anspruch 2, **dadurch gekennzeichnet, dass** der innere Teil (TE2) zumindest abschnittsweise gummielastisch ausgebildet ist.

10. Gleitschutzkette nach Anspruch 9, **dadurch gekennzeichnet, dass** der innere Teil (TE2) als geschlossener Ring ausgebildet ist.

11. Gleitschutzkette nach Anspruch 9, **dadurch gekennzeichnet, dass** der äußere Teil (TE1) zwei freie Enden (END1, END2) aufweist, die mit je einem Teil (TEI1, TEI2) eines lösbaren, selbstschließenden Verschlusses (VER) verbunden sind, wobei die beiden Teile (TEI1, TEI2) mit dem inneren Teil (TE2) des Innenseitenstranges (ISS) verbunden und gegeneinander gezogen sind.

12. Gleitschutzkette für ein Fahrzeug, wobei die Gleitschutzkette (GLK) einen in einem montierten Zustand an einer äußeren Seitenflanke (ASF) eines Fahrzeugreifens (REI) anliegenden Außenseitenstrang (ASS) und einen in einem montierten Zustand an einer inneren Seitenflanke (ISF) des Fahrzeugreifens (REI) anliegenden Innenseitenstrang (ISS) aufweist, wobei zwischen dem Außenseitenstrang (ASS) und dem Innenseitenstrang (ISS) ein in einem montierten Zustand an der Lauffläche (LFL) des Fahrzeugreifens (REI) anliegendes Kettennetz (KNE) angeordnet ist, wobei der Innenseitenstrang (ISS) dehnbar ausgebildet ist, **dadurch gekennzeichnet, dass** zusätzlich zu dem Innenseitenstrang (ISS) zumindest ein weiterer in einem montierten Zustand ebenfalls an der inneren Seitenflanke (ASF) des Fahrzeugreifens anliegender elastischer Strang (STR) vorgesehen ist.

13. Gleitschutzkette nach Anspruch 13, **dadurch gekennzeichnet, dass** der Innenseitenstrang (ISS) und der zumindest eine weitere Strang (STR) jeweils ringförmig ausgebildet sind.

14. Gleitschutzkette (GLK) nach einem der Ansprüche 1 bis 13, **dadurch gekennzeichnet, dass** der Innenseitenstrang mittels Befestigungsmitteln direkt mit dem Kettennetz (KNE) verbunden ist, sodass eine Krafteinleitung von durch den Innenseitenstrang (ISS) hervorgerufenen Spannkräften unmittelbar in das Kettennetz (KNE) gegeben ist.
